# EUROPEAN PATENT SPECIFICATION

(11) **EP 2 638 736 B1**
(45) Date of publication and mention of the grant of the patent: **09.10.2019**
(21) Application number: 11839877.5
(22) Date of filing: 10.11.2011
(51) Int. Cl.: H04M 15/00, H04W 8/26, H04W 4/24, H04L 12/14, H04W 76/10

(54) **METHOD AND SYSTEM FOR ON-DEMAND DATA ACCESS**
VERFAHREN UND SYSTEM FÜR BEDARFSABHÄNGIGEN DATENZUGRIFF
PROCÉDÉ ET SYSTÈME PERMETTANT UN ACCÈS SUR DEMANDE AUX DONNÉES

(30) Priority: 10.11.2010 US 412230 P
(43) Date of publication of application: 18.09.2013
(73) Proprietor: Mobileum, Inc., Cupertino, CA 95014 (US)
(72) Inventor: JIANG, John, Yue Jun, Danville, CA 94506 (US)
(74) Representative: CMS Cameron McKenna Nabarro Olswang LLP
(86) International application number: PCT/US2011/060226
(87) International publication number: WO 2012/064980

(56) References cited:
- WO-A1-2010/057595
- WO-A2-2006/102311
- WO-A2-2007/139883
- US-A1- 2003 051 041
- US-A1- 2006 168 089
- US-A1- 2007 121 839
- US-A1- 2008 153 484
- US-A1- 2010 003 963
- US-A1- 2010 128 685
- US-A1- 2010 211 628
- US-B2- 7 299 272

## Description

### Related Applications

This application claims priority from U.S. Provisional Patent Application No. 61/412,230 entitled "Tokens for Internet Access," filed on November 10, 2010.

### Field of the Invention

The present invention generally relates to mobile communications. More specifically, the invention relates to providing data services to a roaming subscriber.

### Background of the Invention

Roaming traffic contributes a significant percentage of an operator's revenue and even a better percentage of the operator's margin. With increasing competition and regulatory control, operators are being more pressured to increase their roaming revenue. Over the last few years, revenues to the network operators from home subscribers have consistently declined due to increased competition and resulting pricing pressures. Conversely, revenues from roamers have consistently grown in the same period due to increased mobile penetration in local markets and an increase in travel.

Network operators can maximize their margins if roamers use their mobile services while roaming in visited networks (VPMNs) outside their home network (HPMN). These margins improve even more when the roaming subscribers start using data services such as Internet access or E., services while they are roaming in a visited network. This is due to the fact that data services on roaming are extremely expensive.

One solution to the above problem is that subscribers swap their home SIM with a visited network's local SIM card and then access these data services at visiting network's local rates. However, this is a tedious and user un-friendly process as the subscriber first has to procure the local SIM and the subscriber gets out of touch from his home network when he accesses the data service via local (visited) network. Another alternative is that subscriber may keep both SIMs active, by using a new handset for using the local SIM. However, this is an unwanted expense for the subscriber to acquire a new handset and also cumbersome to carry two handsets while roaming.

In another alternative calling cards are generally used while roaming to a visited network to avail local rates. However, calling cards are limited to voice services, and accessing data services is difficult and in some case not possible through calling cards. Even with increasing usage of smart-phones, subscribers are not using them for accessing data service while on roaming. This severely affects a roaming operator's margins. Moreover, the operators are not able to appropriately leverage (in terms of revenue) their inbound roamers due to this constraint.

In accordance with the foregoing, there is a need in the art of a system, a method, for creating a solution that gives an operator the ways to deal with above mentioned problems and should be able to allow the subscriber to use data services at cheaper rates while roaming without changing his SIMI device to a visited network.

WO2007/139883 describes a method and system for providing a PLN service to inbound roamers in a VPN using a sponsor network when no roaming relationship exists between the HPMN and VPMN.

WO2006/102311 describes a method and apparatus for subscribers to use a proprietary wireless email and personal information service (e.g. Blackberry service) within a public mobile network not otherwise configured to enable that use.

WO2010/057595 describes an access point which supports communication in a femto cell of a cellular communication network in which a signal processing logic module further comprises a gateway logic module arranged to provide an interface between the at least one wireless communication unit located within the femto cell and a packet data network

US2010/003963 describes a device for managing a subscriber connection which includes a mechanism for granting connection services to the subscriber connection, a mechanism for monitoring reception behaviour concerning predetermined messages conveyed to the subscriber connection, and a mechanism for controlling a further connection service grant to the subscriber connection based on the reception behaviour.

### Summary

The present invention is directed towards a method and system for providing data services to a subscriber. A gateway facilitates access to data services to the subscriber while roaming in a visited network. The gateway modifies the Access Point Name (APN) to route through either a visited network or a home network to provide the access to data services. The gateway routes through the home network only for accessing specific applications, such as Blackberry® services, for example. For all remaining data services such as Internet, GPRS, etc., the gateway modifies the APN to a local GGSN in the visited network so that the subscriber can access data services at a local rate (as per the visited network).

The system and method of the present invention, in its various aspects facilitate via the gateway access to data service based on either subscriber's request or based on tokens that allow the subscriber to access free data {Internet) services for a limited time period or volume of data.

The system and method of the present invention, in its various aspects, is hereinafter interchangeably referred to as On-demand data access service.

Examples of embodiments of the disclosed technology are as set out in the accompanying claims.

### Brief Description of Drawings

In the drawings, the same or similar reference numbers identify similar elements or acts.
FIG. 1 illustrates a system for implementing On-demand data access service, in
   accordance with an aspect of the present invention;
FIG. 2 represents a flowchart depicting method for providing On-demand data services to subscribers, in accordance with an aspect of the present invention;
FIG. 3 represents a call flow diagram for implementing On-demand data access service, in accordance with an aspect of the present invention;
FIGs. 4a and 4b represents a flow diagram for user experience when using the On-demand data access service, in accordance with a first aspect of the present invention; and
FIGs. 5a and 5b represents a flow diagram for user experience when using the On-demand data access service, in accordance with a second aspect of the present invention.

### Detailed Description

In the following description, for purposes of explanation, specific numbers, materials and configurations are set forth in order to provide a thorough understanding of the present invention. It will be apparent, however, to one having ordinary skill in the art that the present invention may be practiced without these specific details. In some instances, well-known features may be omitted or simplified, so as not to obscure the 30 present invention. Furthermore, reference in the specification to "one aspect" or "an aspect" means that a particular feature, structure or characteristic, described in connection with the aspect, is included in at least one aspect of the present invention. The appearance of the phrase "in an aspect," in various places in the specification, does not necessarily refer to the same aspect.

The present invention provides a system and a method for facilitating data services for a subscriber of a Home Public Mobile Network (HPMN) roaming in a Visited Public Mobile Network (VPMN). In accordance with various aspects, the present invention provides a method and system where a gateway provides data services to the subscriber while roaming in VPMN by modifying Access Point Name (APN) to route through a local number in VPMN. This concept of routing APN through a local number is hereinafter referred to as On-demand data access service. In accordance with various aspects of the present invention, providing data access services is not limited to Internet access, E., services, Email services, etc., but also any other data service applicable. However, for the sake of clarity, we are referring to Internet access as the primary data service in various aspects of the present invention.

In accordance with one aspect of the present invention, the subscriber is roaming at a visited network within his home country. In another aspect of the present invention, the subscriber is roaming at a visited network outside his home country. For sake of clarity, the present invention is explained with national roaming scenarios, however, it will be apparent to a person skilled in the art that this invention will be equally applicable while dealing with all international roaming scenarios.

The On-demand data access service allows a subscriber to access Internet and other data services at cheap local rates from within a visited network without changing his SIM / device. In accordance with various aspects of the present invention, the visited network deploys a gateway that receives subscriber's request to access Internet service and then modifies Access Point Name (APN) to a local number in visited network, to enable data services for the subscriber at local rates. In one aspect of the present invention, the gateway is deployed in a hub location that is accessed by more than one visited networks.

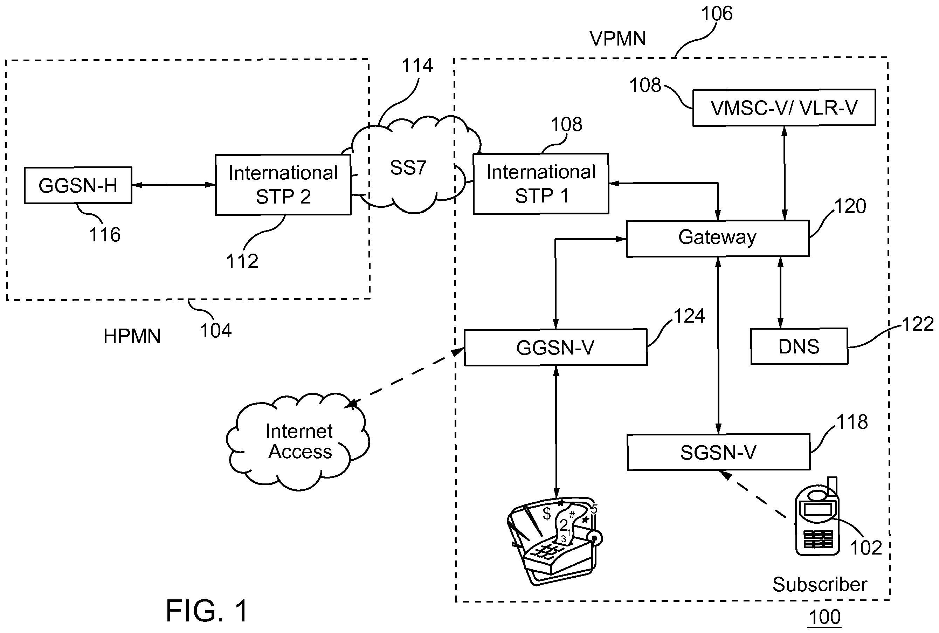

FIG. 1 illustrates a system 100 for implementing On-demand data access services, in accordance with an aspect of the present invention. A subscriber 102 of HPMN 104 is roaming in a VPMN 106. The subscriber 102 is connected to a VPMN VLR 108, when it is roaming outside HPMN 102. In one aspect of the invention, VPMN VLR 108 is integrated with a VMSC in VPMN 106. Notwithstanding, both VPMN VLR and VMSC may have different logical addresses. The signaling corresponding to subscriber 102 is routed using an international STP 1 110 at VPMN 106 and international STP 2 112 at HPMN 104. The HPMN further includes a (Gateway GPRS Support Node) GGSN-H 116. The signaling between HPMN 104 and VPMN 106 is carried using SS7 signaling architecture 114. The signals exchanged between HPMN 104 and VPMN 106 are MAP based signals. Other network elements of HPMN 104 (e.g., MSC/VLR) communicate with various other network elements of VPMN 106 (e.g., HLR, VLR, etc.) via the SS7 link. It will also be apparent to a person skilled in the art that various components of HPMN 104 communicate with VPMN 106 using various signaling techniques including, but not limited to, SS7, SIP, IP, ISUP, etc.

In accordance with various aspect of the present invention, subscriber 102 when roaming in VPMN 106 interfaces with an (Serving GPRS Support Node) SGSN-V 118 to access data services. The request is interfaced by an on-demand data access service gateway 120, which modifies the APN, by querying a DNS 122, a local GGSN-V 124 (of VPMN 106) in order to provide local Internet access to subscriber 102. Hereinafter, On-demand data access Gateway 120 is interchangeably referred to as gateway 120. It will be apparent to a person skilled in the art that gateway 120 is location independent within VPMN 106 and can connect with various other components within VPMN 106. In one aspect of the present invention, the GGSN-V 124 charges back through prepaid charging system to charge subscriber 102.

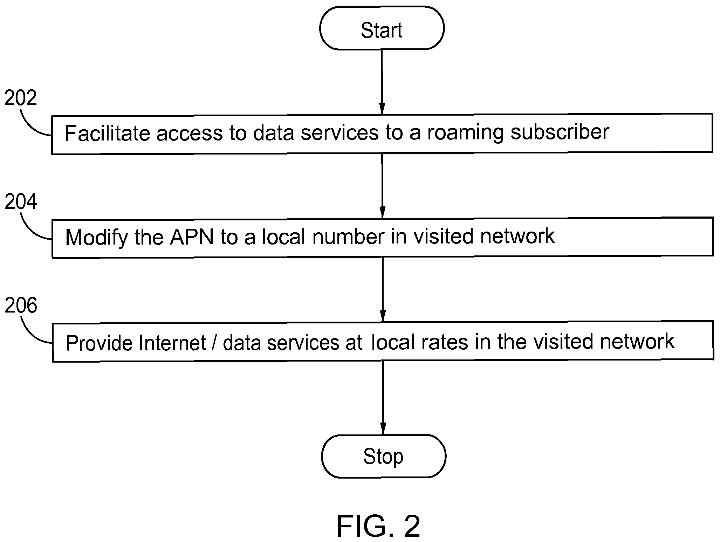

FIG. 2 represents a flowchart depicting method for providing on-demand data access services to subscriber, in accordance with an aspect of the present invention. At step 202, gateway 120 facilitates access to data services to subscriber 102. At step 204, gateway 120 modifies the APN to a local number in the visited network. In one aspect, gateway 120 changes the APN to local GGSN-V 124. Finally at step 206, gateway 120 provides data services (e.g., Internet services) at local rates applicable in VPMN 106.

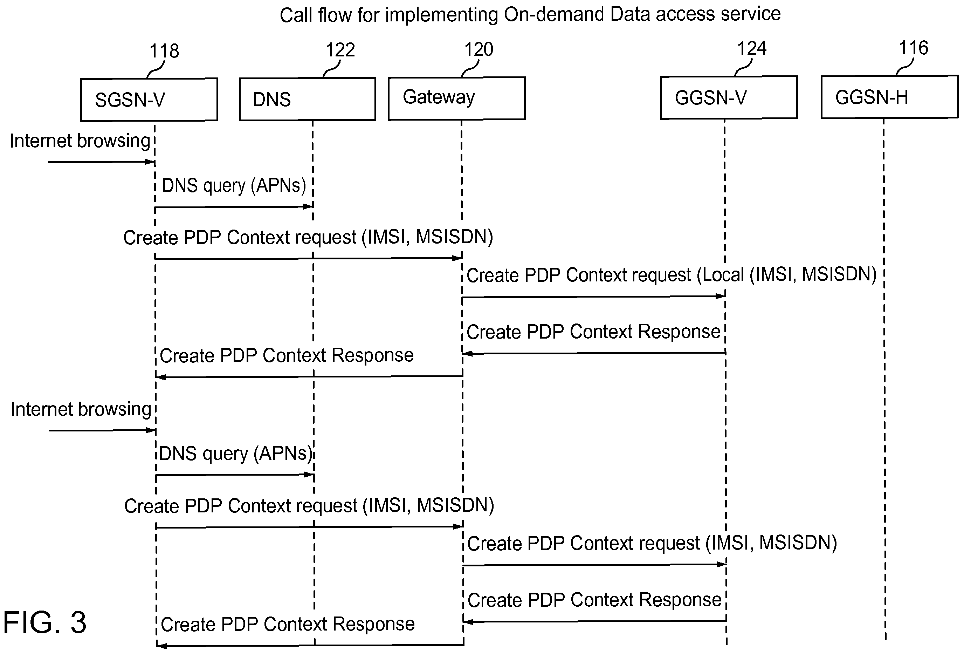

FIG. 3 represents a call flow diagram for implementing On-demand data access service, in accordance with an aspect of the present invention. As shown in the call flow, when subscriber 102 requests for accessing Internet, the request first reaches the SGSN-V 118. The SGSN-V 118 then queries DNS 122 (based on subscriber's IMSI and MSIDN) to check for APN details for creating a data session. Thereafter, SGSN-V 118 sends a create PDP context request with subscriber's IMSI and MSISDN to gateway 120. The gateway 120 modifies the APN to local GGSN, i.e., GGSN-V 124 (instead of GGSN-H 116) and sends the create PDP context message to GGSN-V 124. The GGSN-V 124 returns the create PDP context response, which gateway 120 relays to SGSN-V 118 to enable the PDP context for subscriber 102. This enables subscriber 102 to access data services (e.g., Internet) from within VPMN 106 at local rates. In accordance with another aspect of the present invention, gateway 120 modifies the APN to original GGSN, i.e., GGSN-H 116 to enable certain specific data services such as E.,, which necessarily require home operator GGSN-H 116.

It will be apparent to a person skilled in the art that the On-demand data access can be implemented across multiple radio technologies, like but not limited to, CDMA, GSM, 3G, LTE, WiMax, WiFi, etc. The On-demand data service can work on any phone that has data servicing capabilities.

In accordance with one aspect of the present invention, gateway 120 provides subscriber 102 with an option to access data services either through VPMN 106 or through HPMN 104. In former case, subscriber 102 is charged at local rates applicable within VPMN 106, while in latter case, subscriber 102 is charged at roaming rates of HPMN 104. In accordance with one aspect of the present invention, gateway 120 offers free Internet access to subscriber 102. The free Internet access while roaming is based on tokens (or day pass or voucher) that are offered by gateway 120 to subscriber 102 (inbound roamer) while roaming in VPMN 106. These tokens are allocated by gateway 102 based on multiple pre-defined logic conditions, such as, but not limited to:
a) Time spent by subscriber 102 in VPMN 106. (More time spent increases eligibility of more tokens)
b) Historical record of subscriber 102 using data services while roaming in VPMN 106 (frequent data services usage by subscriber increase no. of tokens)
c) Frequency of subscriber 102 roaming in VPMN 106 (more frequent roamer gets more tokens)
d) First time roaming in VPMN 106 (used to entice inbound roamers coming for first time in VPMN by offering them free/ cheaper Internet services tokens)
e) Subscriber 102 attempts to latch onto a competitor visited network (then used by VPMN 106 to win back the lost subscriber 102)
f) No. of tokens is governed by HPMN 104; and
g) No criteria for issuing a token

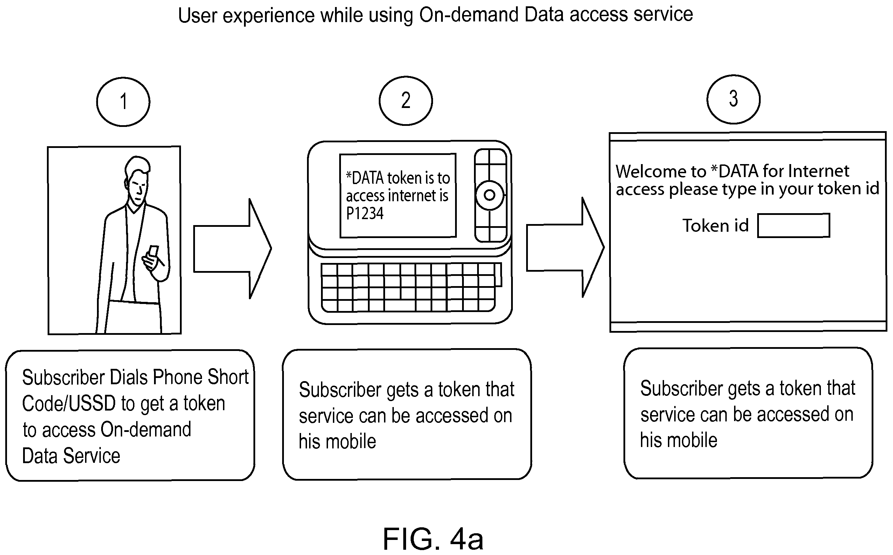

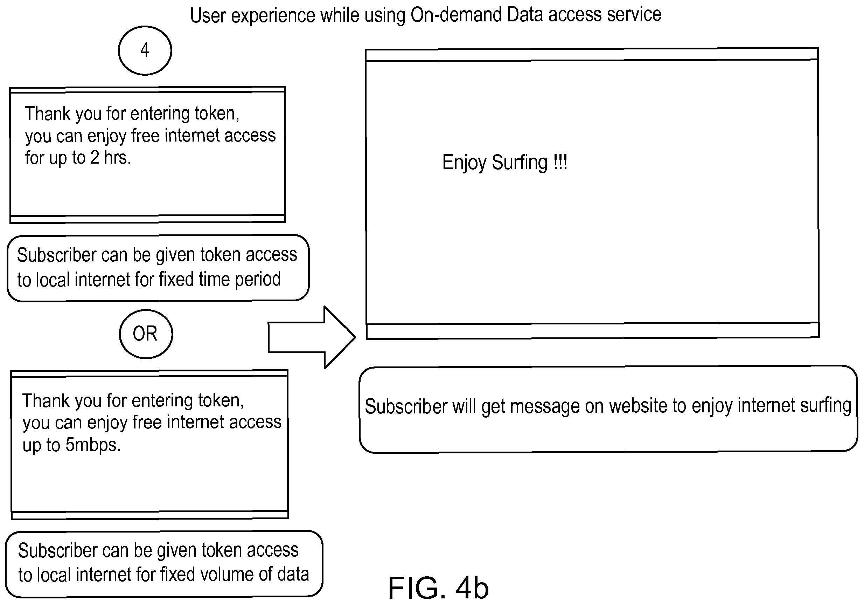

In accordance with various aspects of the present invention, subscriber 102 may request for data service (Internet service) when roaming in VPMN 106. FIGs. 4a and 4b represents a flow diagram for user experience when using the On-demand data access service, in accordance with a first aspect of the present invention. Subscriber 102 dials a short code or via USSD to get access to On-demand data access service. In accordance with one aspect of the present invention, subscriber 102 may dial "*Data" (as short code) on this mobile device's keypad to request for this data service. It will be apparent to a person skilled in the art that any other short code may be used to activate and avail this On-demand data access service. Thereafter, as shown in FIG. 4a, subscriber 102 gets allocated a token to access the Internet. This token is allocated by gateway 120. The subscriber 102 can then login with this token to access the Internet. In one aspect of the present, the token grants unlimited access to the Internet for a fixed time period. In another aspect of the present invention, the token grants access for an unlimited time but for a fixed volume of data.

In accordance with various aspects of the present invention, the token allocation and de-allocation management is managed by gateway 120. In one aspect, the token immediately expires when subscriber attempts to depart the VPMN 106. New tokens can be issued by gateway 120 when subscriber 102 returns to VPMN 106. In one case, gateway 120 sends a win-back SMS to subscriber 102 when he latches onto a competitor network to enable win the lost inbound roamer. The tokens can be issued based on various logics as mentioned above. In addition to these logics, a new token can be issued when there is an ongoing data session (PDP context) and subscriber 102 is eligible to more tokens. The subscriber 102 is then informed about using a second token to continue using data services. However, in case subscriber 102's current token is about to expire and he is not eligible for anymore tokens but there is an ongoing data session, then gateway 120 terminates the free data sessions immediately as the current token expires. In another aspect of the present invention, subscriber 102 can earn more tokens depending on his stay in VPMN 106. In case the subscriber 102 stays for some more time in VPMN 106, then gateway 102 allocates him more tokens and his ongoing data session does not get terminated.

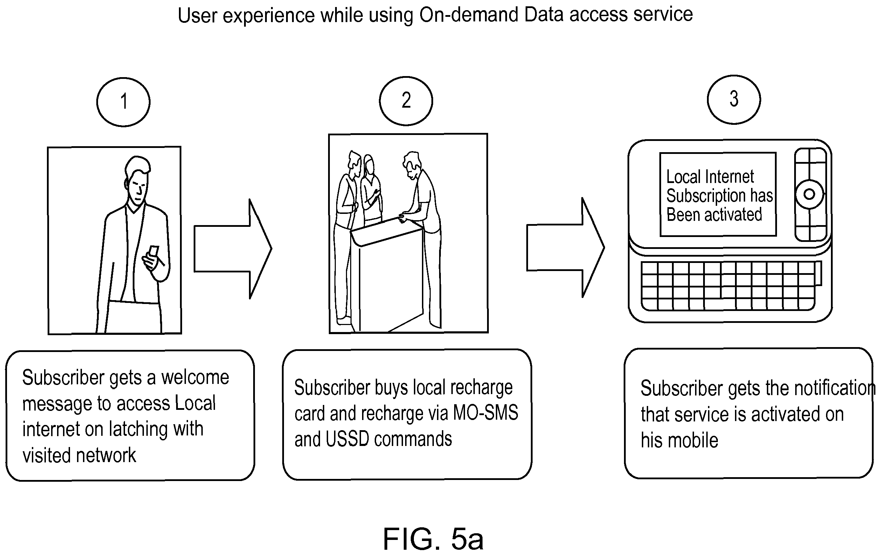

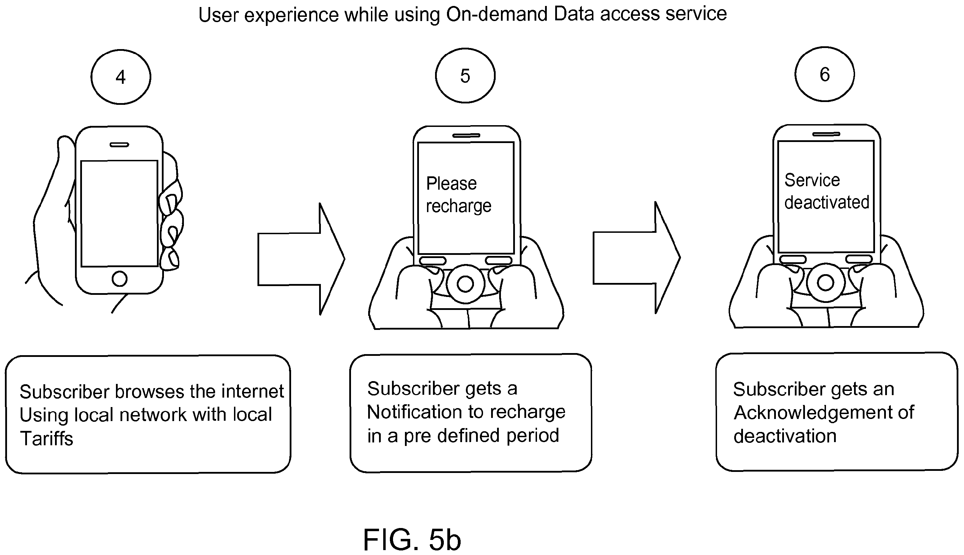

FIGs. 5a and 5b represents a flow diagram for user experience when using the On-demand data access service, in accordance with a second aspect of the present invention. In this aspect, subscriber 102 gets a welcome message to access local Internet when he latches onto VPMN 106. Subscriber 102 may then buy a local recharge card and recharge via MO-SMS or USSD commands. Thereafter, subscriber 102 gets a notification that data service (i.e., Internet) has been activated on his mobile. Subscriber 102 can use the Internet service at VPMN 106's local rates. Now, subscriber 102 will get notified by gateway 120 to recharge the card in a pre-defined period. In case the subscriber 102 does not recharge the card, then he is notified by gateway 120 for deactivation of the free data services. The recharge card in one aspect is similar to the tokens explained above.

It will be apparent to a person skilled in the art that these two cases (as shown in Figs 4a and 4b and Figs. 5a and 5b) are only exemplary illustrations of implementing the invention, and are not intended to limit the scope of the present invention. Many more different uses cases can be built using different call logics to implement various aspects of the present invention.

The subscribers benefit by using various aspects of this invention as they are able to access Internet (or data service) at reduced rates even while roaming. They do not face any access delays and are able to use this service without any PIN, etc. From an operators' perpective, this invention allows the operator to make every potential subscriber (incoming / inbound roamer) a potential customer, thereby increasing their revenue opportunities. The operator is able to generate revenue from day one. The operator is able to use existing infrastructure to implement this invention and provide On-demand data access services. Also, the operator will be able to cash on the indirect revenues where the subscriber may latch onto the visited network implementing this invention (i.e., VPMN 106), just because he wants to surf Internet for free / reduced rate.

It will be apparent to a person skilled in the art, that the present invention can also be applied to Code Division Multiple Access (CDMA)/ American National Standards Institute # 41D (ANSI-41D), and various other technologies such as, but not limited to, VoIP, WiFi, 3GSM and inter-standard roaming. In one exemplary case, a CDMA outbound roamer travels with an HPMN CDMA handset. In another exemplary case, the CDMA outbound roamer travels with an HPMN GSM SIM and a GSM handset. In yet another exemplary case, GSM outbound roamer travels with an HPMN CDMA RUIM and a CDMA handset. To support these variations, system 100 will have a separate SS7 and network interfaces, corresponding to both the HPMN and VPMN networks. It will also be apparent to a person skilled in the art that these two interfaces in different directions may not have to be the same technologies. Moreover, there could be multiple types of interface in both directions.

An exemplary list of the mapping between GSM MAP and ANSI-41D is described in the table below as a reference.

| **GSM MAP** | **ANSI-41D** |
|---|---|
| Location Update/ISD | REGNOT |
| Cancel Location | REGCAN |
| RegisterSS | FEATUREREQUEST |
| InterrogateSS | FEATUREREQUEST |
| SRI-SM | SMSREQ |
| SRI | LOCATION REQUEST |
| ForwardSMS | SMSDPP |
| ReadyForSMS | SMSNOTIFICATION |
| AlertServiceCenter | SMSNOTIFICATION |
| ReportSMSDelivery | SMDPP |
| ProvideRoamingNumber | ROUTING REQUEST |

The present invention can take the form of an entirely hardware aspect, an entirely software aspect, or an aspect containing both hardware and software elements. In accordance with an aspect of the present invention, software, including but not limited to, firmware, resident software, and microcode, implements the invention.

Furthermore, the invention can take the form of a computer program product, accessible from a computer-usable or computer-readable medium providing program code for use by, or in connection with, a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CDROM), compact disk - read/write (CD-R/W) and Digital Versatile Disk (DVD).

The components of present system described above include any combination of computing components and devices operating together. The components of the present system can also be components or subsystems within a larger computer system or network. The present system components can also be coupled with any number of other components (not shown), such as other buses, controllers, memory devices, and data input/output devices, in any number of combinations. In addition, any number or combination of other processor-based components may be carrying out the functions of the present system.

It should be noted that the various components disclosed herein may be described using computer aided design tools and/or expressed (or represented), as data and/or instructions embodied in various computer-readable media, in terms of their behavioral, register transfer, logic component, transistor, layout geometries, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof.

Unless the context clearly requires otherwise, throughout the description and the claims, the words "comprise," "comprising," and the like are to be construed in an inclusive sense as opposed to an exclusive or exhaustive sense; that is to say, in a sense of "including, but may not be limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, it covers all of the following interpretations: any of the items in the list, all of the items in the list and any combination of the items in the list.

The above description of illustrated aspects of the present system is not intended to be exhaustive or to limit the present system to the precise form disclosed. While specific aspects of, and examples for, the present system are described herein for illustrative purposes, various equivalent modifications are possible within the scope of the present system, as those skilled in the art will recognize. The teachings of the present system provided herein can be applied to other processing systems and methods. They may not be limited to the systems and methods described above.

The elements and acts of the various aspects described above can be combined to provide further aspects. These and other changes can be made in light of the above detailed description.

### Other Variations

Provided above for the edification of those of ordinary skill in the art, and not as a limitation on the scope of the invention, are detailed illustrations of a scheme for proactive roaming tests, discoveries of roaming partner services and discoveries of frauds in roaming using simulated roaming traffic. Numerous variations and modifications within the spirit of the present invention will of course occur to those of ordinary skill in the art in view of the aspects that have been disclosed. For example, the present invention is implemented primarily from the point of view of GSM mobile networks as described in the aspects. However, the present invention may also be effectively implemented on GPRS, 3G, CDMA, WCDMA, WiMax, etc., or any other network of common carrier telecommunications in which end users are normally configured to operate within a "home" network to which they normally subscribe, but have the capability of also operating on other neighboring networks, which may even be across international borders.

The examples under the system of present invention detailed in the illustrative examples contained herein are described using terms and constructs drawn largely from GSM mobile telephony infrastructure. However, use of these examples should not be interpreted as limiting the invention to those media. The system and method can be of use and provided through any type of telecommunications medium, including without limitation: (i) any mobile telephony network including without limitation GSM, 3GSM, 3G, CDMA, WCDMA or GPRS, satellite phones or other mobile telephone networks or systems; (ii) any so-called WiFi apparatus normally used in a home or subscribed network, but also configured for use on a visited or non-home or non-accustomed network, including apparatus not dedicated to telecommunications such as personal computers, Palm-type or Windows Mobile devices; (iii) an entertainment console platform such as Sony Playstation, PSP or other apparatus that are capable of sending and receiving telecommunications over home or non-home networks, or even (iv) fixed-line devices made for receiving communications, but capable of deployment in numerous locations while preserving a persistent subscriber id such as the eye2eye devices from Dlink; or telecommunications equipment meant for voice over IP communications such as those provided by Vonage or Packet8.

In describing certain aspects of the system under the present invention, this specification follows the path of a telecommunications call, from a calling party to a called party. For the avoidance of doubt, such a call can be a normal voice call, in which the subscriber telecommunications equipment is also capable of visual, audiovisual or motion-picture display. Alternatively, those devices or calls can be for text, video, pictures or other communicated data.

In the foregoing specification, specific aspects of the present invention have been described. However, one of ordinary skill in the art will appreciate that various modifications and changes can be made without departing from the scope of the present invention as set forth in the claims below. Accordingly, the specification and the figures are to be regarded in an illustrative rather than a restrictive sense, and all such modifications are intended to be included within the scope of present invention as defined by the appended claims. The benefits, advantages, solutions to problems, and any element(s) that may cause any benefit, advantage, or solution to occur, or to become more pronounced, are not to be construed as a critical, required, or essential feature or element of any or all of the claims.

### APPENDIX

| **Acronym** | **Description** |
|---|---|
| 3G | Third generation of mobile |
| ACM | ISUP Address Completion Message |
| ANM | ISUP Answer Message |
| ANSI-41 | American National Standards Institute #41 |
| ATI | Any Time Interrogation |
| BCSM | Basic Call State Model |
| BSC | Base Station Controller |
| BOIC | Barring Outgoing International Calls |
| BOIC-EX-Home | Barring Outgoing International Calls except to home country |
| CAMEL | Customized Application for Mobile Enhanced Logic |
| CAP | Camel Application Part |
| CB | Call Barring |
| CC | Country Code |
| CDMA | Code Division Multiplexed Access |
| CdPA | Called Party Address |
| CDR | Call Detail Record |
| CF | Call Forwarding |
| CgPA | Calling Party Address |
| CIC | Circuit Identification Code |
| CLI | Calling Line Identification |
| CSD | Circuit Switched Data |
| CSI | Camel Subscription Information |
| DPC | Destination Point Code |
| DSD | Delete Subscriber Data |
| DTMF | Dual Tone Multi-Frequency |
| ERB | CAP Event Report Basic call state model |
| EU | European Union |
| FPMN | Friendly Public Mobile Network |
| FTN | Forward-To-Number |
| GLR | Gateway Location Register |
| GGSN | Gateway GPRS Support Node |
| GMSC | Gateway MSC |
| GMSC-F | GMSC in FPMN |
| GMSC-H | GMSC in HPMN |
| GPRS | General Packet Radio System |
| GSM | Global System for Mobile |
| GSMA | GSM Association |
| GSM SSF | GSM Service Switching Function |
| GsmSCF | GSM Service Control Function |
| GT | Global Title |
| GTP | GPRS Tunnel Protocol |
| HLR | Home Location Register |
| HPMN | Home Public Mobile Network |
| IN | Intelligent Network |
| IOT | Inter-Operator Tariff |
| GTT | Global Title Translation |
| IAM | Initial Address Message |
| IDP | Initial DP IN/CAP message |
| IDD | International Direct Dial |
| IMSI | International Mobile Subscriber Identity |
| IMSI-H | HPMN IMSI |
| IN | Intelligent Network |
| INAP | Intelligent Network Application Part |
| INE | Interrogating Network Entity |
| IP | Internet Protocol |
| IREG | International Roaming Expert Group |
| IRS | International Revenue Share |
| ISC | International Service Carrier |
| ISD | MAP Insert Subscriber Data |
| ISG | International Signal Gateway |
| IST | Immediate Service Termination |
| ISTP | International STP |
| ISTP-F | ISTP connected to FPMN STP |
| ISTP-H | ISTP connected to HPMN STP |
| ISUP | ISDN User Part |
| ITPT | Inbound Test Profile Initiation |
| ITR | Inbound Traffic Redirection |
| IVR | Interactive Voice Response |
| LU | Location Update |
| LUP | MAP Location Update |
| MAP | Mobile Application Part |
| MCC | Mobile Country Code |
| MCC | Mobile Country Code |
| MD | Missing Data |
| ME | Mobile Equipment |
| MGT | Mobile Global Title |
| MMS | Multimedia Message Service |
| MMSC | Multimedia Message Service Center |
| MMSC-F | FPMN MMSC |
| MMSC-H | HPMN MMSC |
| MNC | Mobile Network Code |
| MNP | Mobile Number Portability |
| MO | Mobile Originated |
| MOS | Mean Opinion Score |
| MS | Mobile Station |
| MSC | Mobile Switching Center |
| MSISDN | Mobile Station International Subscriber Directory Number |
| MSISDN-F | FPMN MSISDN |
| MSISDN-H | HPMN MSISDN |
| MSRN | Mobile Station Roaming Number |
| MSRN-F | FPMN MSRN |
| MSRN-H | HPMN MSRN |
| MT | Mobile Terminated |
| MTP | Message Transfer Part |
| NDC | National Dialing Code |
| NP | Numbering Plan |
| NPI | Numbering Plan Indicator |
| NRTRDE | Near Real Time Roaming Data Exchange |
| O-CSI | Originating CAMEL Subscription Information |
| OCN | Original Called Number |
| ODB | Operator Determined Barring |
| OPC | Origination Point Code |
| OR | Optimal Routing |
| ORLCF | Optimal Routing for Late Call Forwarding |
| OTA | Over The Air |
| OTPI | Outbound Test Profile Initiation |
| PDP | Protocol Data Packet |
| PDN | Packet Data Network |
| PDU | Packet Data Unit |
| PRN | MAP Provide Roaming Number |
| PSI | MAP Provide Subscriber Information |
| QoS | Quality of Service |
| RAEX | Roaming Agreement EXchange |
| RI | Routing Indicator |
| RIS | Roaming Intelligence System |
| RDN | Redirecting Number |
| RNA | Roaming Not Allowed |
| RR | Roaming Restricted due to unsupported feature |
| RRB | CAP Request Report Basic call state model |
| RSD | Restore Data |
| RTP | Real-Time Transport Protocol |
| SAI | Send Authentication Info |
| sc | Short Code |
| SCA | Smart Call Assistant |
| SCCP | Signal Connection Control part |
| SCP | Signaling Control Point |
| SF | System Failure |
| SG | Signaling Gateway |
| SGSN | Serving GPRS Support Node |
| SGSN-F | FPMN SGSN |
| SIM | Subscriber Identity Module |
| SIGTRAN | Signaling Transport Protocol |
| SME | Short Message Entity |
| SM-RP-UI | Short Message Relay Protocol User Information |
| SMS | Short Message Service |
| SMSC | Short Message Service Center |
| SMSC-F | FPMN SMSC |
| SMSC-H | HPMN SMSC |
| SoR | Steering of Roaming |
| SPC | Signal Point Code |
| SRI | MAP Send Routing Information |
| SRI-SM | MAP Send Routing Information For Short Message |
| SS | Supplementary Services |
| SS7 | Signaling System #7 |
| SSN | Sub System Number |
| SSP | Service Switch Point |
| STK | SIM Tool Kit Application |
| STP | Signal Transfer Point |
| STP-F | FPMN STP |
| STP-H | HPMN STP |
| TADIG | Transferred Account Data Interchange Group |
| TAP | Transferred Account Procedure |
| TCAP | Transaction Capabilities Application Part |
| VT-CSI | Visited Terminating CAMEL Service Information |
| TP | SMS Transport Protocol |
| TR | Traffic Redirection |
| TS | Traffic Steering |
| TT | Translation Type |
| UD | User Data |
| UDH | User Data Header |
| UDHI | User Data Header Indicator |
| USSD | Unstructured Supplementary Service Data |
| VAS | Value Added Service |
| VIP | Very Important Person |
| VLR | Visited Location Register |
| VLR-F | FPMN VLR |
| VLR-H | HPMN VLR |
| VLR-V | VPMN VLR |
| VMSC | Visited Mobile Switching Center |
| VoIP | Voice over IP |
| VPMN | Visited Public Mobile Network |
| ATI | Access Transport Information |
| UDV | Unexpected Data Value |
| USI | User Service Information |
| WAP | Wireless Access Protocol |

### Technical references, the entirety of each of which is incorporated by reference herein:

GSM 902 on MAP specification
Digital cellular telecommunications system (Phase 2+)
Mobile Application Part (MAP) Specification
(3GPP TS 09.02 version 7.9.0 Release 1998)
GSM 340 on SMS
Digital cellular telecommunications system (Phase 2+)
Technical realization of the Short Message Service (SMS)
(GSM 03.40 version 7.4.0 Release 1998)
GSM 378 on CAMEL,
GSM 978 on CAMEL Application Protocol,
GSM 379 on CAMEL Support of Optimal Routing (SOR),
GSM 318 on CAMEL Basic Call Handling
ITU-T Recommendation Q.1214 (1995), Distributed functional plane for intelligent network CS-1,
ITU-T Recommendation Q.1218 (1995), Interface Recommendation for intelligent network CS-1,
ITU-T Recommendation Q.762 (1999), Signaling system No. 7 - ISDN user part general functions of messages and signals,
ITU-T Recommendation Q.763 (1999), Signaling system No. 7 - ISDN user part formats and codes,
ITU-T Recommendation Q.764 (1999), Signaling system No. 7 - ISDN user part signaling procedures,
ITU-T Recommendation Q.765 (1998), Signaling system No. 7 - Application transport mechanism,
ITU-T Recommendation Q.766 (1993), Performance objectives in the integrated services digital network application,
ITU-T Recommendation Q.769.1 (1999), Signaling system No. 7 - ISDN user part enhancements for the support of Number Portability

## Claims

1. A method for providing on-demand access to data services to a subscriber device (102), the method comprising:
facilitating, via a gateway (120), on-demand access of the subscriber device (102) to the data services, while the subscriber device (102) is roaming in a visited network (106),
wherein when the subscriber device (102) requests the data services while roaming in the visited network (106), when the data services request is received by the gateway (120), the gateway (102) provides access to the data services responsive to receiving the request by modifying an Access Point Name (APN) to route access to the data services through one of the visited network (106) and a home network (104), and
wherein the gateway (120) provides the subscriber device (102) with an option to access data services either through the visited network 106 or the home network (104).

2. The method of claim 1, wherein the gateway (120) provides the data services at local rates applicable within the visited network (106).

3. The method of claim 1, wherein the gateway (120) modifies the APN to a local number in the visited network (106).

4. The method of claim 1, further comprising: modifying, via the gateway (120), the APN to route through one of the Gateway General Packet Radio System (GPRS) Support Node (GGSN) of the visited network (106) for local Internet access and the GGSN of the home network (104) for one or more specific applications.

5. The method of claim 1
wherein the option offers the subscriber device (102), via the gateway (120), an option to access data services via one of the visited network (106) at local rates and the home network (104) at regular roaming rates.

6. The method of claim 1, wherein the option offers the subscriber device (102), via the gateway (120), free access to data services while roaming in the visited network (106).

7. The method of claim 6, wherein the free access to data services is offered based on one or more tokens allocated to the subscriber device (102) based on a pre-defined logic.

8. The method of claim 7, wherein the pre-defined logic for issuing tokens comprises at least one of:
time spent by the subscriber device (102) in the visited network (106);
track of data services used by the subscriber device (102) in the visited network (106);
frequency of the subscriber device (102) roaming in the visited network (106);
first time roaming by the subscriber device (102) in the visited network (106);
current token is about to expire through which the subscriber device (102) is using the data services;
a number of tokens governed by the operator of the home network (104); and
attempts by the subscriber device (102) to latch onto another network outside the visited network (106).

9. The method of claim 7, wherein the tokens enable the subscriber device (102) to use data services for one of a fixed time period and a fixed volume of data.

10. The method of claim 1, wherein the subscriber device (102) requests access to data services while already roaming in the visited network (106).

11. The method of claim 10, wherein the subscriber device (102) requests access to data services by dialing a pre-defined short code or through Unstructured Supplementary Service Data (USSD) to activate free data services; and, optionally, wherein the pre-defined short code is '*data'.

12. The method of claim 1, further comprising: sending, via the gateway (120), a message to the subscriber device (102) to access data services when the subscriber device (102) attempts to latch onto a operator of a network that is different from the operator of the visited network (106) and the operator of the home network (104).

13. A system for providing on-demand access to data services to a subscriber device (102), the system comprising:
a gateway (120) configured to facilitate on-demand access of the subscriber device (102) to the data services, while the subscriber device (102) is roaming in a visited network (106);
wherein when the subscriber device (102) requests the data services while roaming in the visited network (106), when request reaches the gateway (120), the gateway (120) is further configured to provide access to the data services responsive to the request by modifying an Access Point Name (APN) to route access to the data services through one of the visited network (106) and a home network (104),
wherein the gateway (120) provides the subscriber device (102) with an option to access data services either through the visited network 106 or the home network (104).

14. The system of claim 13, wherein the gateway (120) is deployed in one of the visited network (106) and a hub location accessed by one or more partner visited networks (106).

15. A computer program product comprising a computer usable medium having control logic stored therein for causing a computer to provide on-demand data services to a subscriber device (102), the control logic comprising:
means for facilitating, via a gateway (120), on-demand access of the subscriber device (102) to the data services, while the subscriber device (102) is roaming in a visited network (106), wherein when the subscriber device (102) requests the data services while roaming in the visited network (106), when request reaches the gateway (120),
the gateway (120) provides the already roaming subscriber device (102) with an option to access data services either through the visited network 106 or a home network (104); and
the gateway (120) provides access to the data services responsive to the request by modifying an Access Point Name (APN) to route access to the data services through one of the visited network (106) and the home network (104),

## Patentansprüche

1. Verfahren zum Bereitstellen von On-demand-Zugriff auf Datendienste für eine Teilnehmervorrichtung (102), wobei das Verfahren umfasst:
Vereinfachen, über ein Gateway (120), von On-demand-Zugriff der Teilnehmervorrichtung (102) auf die Datendienste, während die Teilnehmervorrichtung (102) in einem besuchten Netz (106) roamt,
wobei wenn die Teilnehmervorrichtung (102) die Datendienste anfragt, während sie im besuchten Netz (106) roamt, das Gateway (102), wenn die Datendienstanfrage vom Gateway (120) empfangen wird, in Antwort auf das Empfangen der Anfrage Zugriff auf die Datendienste durch Abändern eines Acces Point Name (APN) bereitstellt, um Zugriff auf die Datendienste durch eines aus dem besuchten Netz (106) und einem Heimatnetz (104) zu routen, und
wobei das Gateway (120) der Teilnehmervorrichtung (102) eine Option bereitstellt, um entweder durch das besuchte Netz 106 oder das Heimatnetz (104) auf Datendienste zuzugreifen.

2. Verfahren nach Anspruch 1, wobei das Gateway (120) die Datendienste zu Ortstarifen bereitstellt, die innerhalb des besuchten Netzes (106) gelten.

3. Verfahren nach Anspruch 1, wobei das Gateway (120) den APN auf eine Ortsnummer im besuchten Netz (106) abändert.

4. Verfahren nach Anspruch 1, weiter umfassend: Abändern des APN über das Gateway (120), um durch eines aus dem Gateway General Packet Radio System (GPRS) Support Node (GGSN) des besuchten Netzes (106), für Orts-Internetzugriff, und dem GGSN des Heimatnetzes (104), für eine oder mehrere spezifische Anwendungen, zu routen.

5. Verfahren nach Anspruch 1, wobei die Option der Teilnehmervorrichtung (102) über das Gateway (120) eine Option bietet, um über eines aus dem besuchten Netz (106), zu Ortstarifen, und dem Heimatnetz (104), zu regulären Roaming-Tarifen, auf Datendienste zuzugreifen.

6. Verfahren nach Anspruch 1, wobei die Option der Teilnehmervorrichtung (102) über das Gateway (120) kostenlosen Zugriff auf Datendienste bietet, während dieselbe im besuchten Netz (106) roamt.

7. Verfahren nach Anspruch 6, wobei der kostenlose Zugriff auf Datendienste auf Basis von einem oder mehreren Token geboten wird, die der Teilnehmervorrichtung (102) auf Basis einer vordefinierten Logik zugewiesen werden.

8. Verfahren nach Anspruch 7, wobei die vordefinierte Logik zum Ausstellen von Token mindestens eines umfasst aus:
Zeit, die von der Teilnehmervorrichtung (102) im besuchten Netz (106) verbracht wird;
Verfolgung von Datendiensten, die von der Teilnehmervorrichtung (102) im besuchten Netz (106) genutzt werden;
Häufigkeit, mit der die Teilnehmervorrichtung (102) im besuchten Netz (106) roamt;
erstmaligem Roaming der Teilnehmervorrichtung (102) im besuchten Netz (106);
baldigem Verfall des aktuellen Tokens, über den die Teilnehmervorrichtung (102) die Datendienste nutzt;
einer Anzahl von Token, über die der Betreiber des Heimatnetzes (104) verfügt; und
Versuchen der Teilnehmervorrichtung (102), sich bei einem anderen Netz außerhalb des besuchten Netzes (106) einzubuchen.

9. Verfahren nach Anspruch 7, wobei die Token der Teilnehmervorrichtung (102) ermöglichen, Datendienste für eines aus einem festen Zeitraum und einem festen Datenvolumen zu nutzen.

10. Verfahren nach Anspruch 1, wobei die Teilnehmervorrichtung (102) Zugriff auf Datendienste anfragt, während sie bereits im besuchten Netz (106) roamt.

11. Verfahren nach Anspruch 10, wobei die Teilnehmervorrichtung (102) Zugriff auf Datendienste durch Wählen eines vordefinierten Kurzcodes, oder durch Unstructured Supplementary Service Data (USSD) anfragt, um kostenlose Datendienste zu aktivieren; und wobei der vordefinierte Kurzcode gegebenenfalls '*data' ist.

12. Verfahren nach Anspruch 1, weiter umfassend: Senden einer Nachricht über das Gateway (120) an die Teilnehmervorrichtung (102), um auf Datendienste zuzugreifen, wenn die Teilnehmervorrichtung (102) versucht, sich bei einem Betreiber eines Netzes einzubuchen, der sich vom Betreiber des besuchten Netzes (106) und dem Betreiber des Heimatnetzes (104) unterscheidet.

13. System zum Bereitstellen von On-Demand-Zugriff auf Datendienste für eine Teilnehmervorrichtung (102), wobei das System umfasst:
ein Gateway (120), das dazu konfiguriert ist, On-demand-Zugriff der Teilnehmervorrichtung (102) auf die Datendienste zu vereinfachen, während die Teilnehmervorrichtung (102) in einem besuchten Netz (106) roamt;
wobei wenn die Teilnehmervorrichtung (102) die Datendienste anfragt, während sie im besuchten Netz (106) roamt, das Gateway (120) weiter dazu konfiguriert ist, wenn Anfrage das Gateway (120) erreicht, in Antwort auf die Anfrage Zugriff auf die Datendienste durch Abändern eines Acces Point Name (APN) bereitzustellen, um Zugriff auf die Datendienste durch eines aus dem besuchten Netz (106) und einem Heimatnetz (104) zu routen,
wobei das Gateway (120) der Teilnehmervorrichtung (102) eine Option bereitstellt, um entweder durch das besuchte Netz 106 oder das Heimatnetz (104) auf Datendienste zuzugreifen.

14. System nach Anspruch 13, wobei das Gateway (120) in einem aus dem besuchten Netz (106) und einem Hub-standort implementiert ist, auf den von einem oder mehreren besuchten Partnernetzen (106) zugegriffen wird.

15. Computerprogrammprodukt, das ein computernutzbares Medium umfasst, welches in demselben Steuerlogik gespeichert aufweist, um einen Computer dazu zu bringen, On-demand-Datendienste für eine Teilnehmervorrichtung (102) bereitzustellen, wobei die Steuerlogik umfasst:
Mittel zum Vereinfachen, über ein Gateway (120), von On-demand-Zugriff der Teilnehmervorrichtung (102) auf die Datendienste, während die Teilnehmervorrichtung (102) in einem besuchten Netz (106) roamt, wobei wenn die Teilnehmervorrichtung (102) die Datendienste anfragt, während sie im besuchten Netz (106) roamt, wenn Anfrage das Gateway (120) erreicht,
das Gateway (120) der bereits roamenden Teilnehmervorrichtung (102) eine Option bereitstellt, um entweder durch das besuchte Netz 106 oder das Heimatnetz (104) auf Datendienste zuzugreifen; und
das Gateway (120) in Antwort auf die Anfrage Zugriff auf die Datendienste durch Abändern eines Acces Point Name (APN) bereitstellt, um Zugriff auf die Datendienste durch eines aus dem besuchten Netz (106) und dem Heimatnetz (104) zu routen.

## Revendications

1. Procédé permettant de fournir un accès à la demande à des services de données à un dispositif d'abonné (102), le procédé comprenant :
la facilitation, par l'intermédiaire d'une passerelle (120), d'un accès à la demande du dispositif d'abonné (102) aux services de données, pendant que le dispositif d'abonné (102) est en itinérance dans un réseau visité (106),
dans lequel, lorsque le dispositif d'abonné (102) demande les services d'abonné en itinérance dans le réseau visité (106), lors de la réception de la demande de service de données par la passerelle (120), la passerelle (102) fournit un accès aux services de données en réponse à la réception de la demande par la modification d'un nom de point d'accès (APN) pour acheminer un accès aux services de données par l'intermédiaire de l'un du réseau visité (106) et d'un réseau de rattachement (104), et
dans lequel la passerelle (120) fournit, au dispositif d'abonné (102), une option d'accès aux services de données par l'intermédiaire soit du réseau visité 106 soit du réseau de rattachement (104).

2. Procédé selon la revendication 1, dans lequel la passerelle (120) fournit les services de données à des tarifs locaux applicables à l'intérieur du réseau visité (106).

3. Procédé selon la revendication 1, dans lequel la passerelle (120) modifie l'APN à un numéro local dans le réseau visité (106).

4. Procédé selon la revendication 1, comprenant en outre : la modification, par l'intermédiaire de la passerelle (120), de l'APN pour l'acheminement par l'intermédiaire de l'un du noeud de prise en charge (GGSN) de système radio général par paquets (GPRS) de passerelle du réseau visité (106) pour un accès Internet local et du GGSN du réseau de rattachement (104) pour une ou plusieurs applications spécifiques.

5. Procédé selon la revendication 1, dans lequel l'option propose, au dispositif d'abonné (102), par l'intermédiaire de la passerelle (120), l'accès à des services de données par l'intermédiaire de l'un du réseau visité (106) à des tarifs locaux et du réseau de rattachement (104) à des tarifs normaux d'itinérance.

6. Procédé selon la revendication 1, dans lequel l'option propose, au dispositif d'abonné (102), par l'intermédiaire de la passerelle (120), un accès libre à des services de données en itinérance dans le réseau visité (106).

7. Procédé selon la revendication 6, dans lequel l'accès libre à des services de données est proposé sur la base d'un ou plusieurs jetons alloués au dispositif d'abonné (102) sur la base d'une logique prédéfinie.

8. Procédé selon la revendication 7, dans lequel la logique prédéfinie pour l'émission de jetons comprend au moins l'un de :
le temps passé par le dispositif d'abonné (102) dans le réseau visité (106) ;
le suivi de services de données utilisés par le dispositif d'abonné (102) dans le réseau visité (106) ;
la fréquence d'itinérance du dispositif d'abonné (102) dans le réseau visité (106) ;
la première fois que le dispositif d'abonné (102) est en itinérance dans le réseau visité (106) ;
le jeton actuel par l'intermédiaire duquel le dispositif d'abonné (102) utilise les services de données est sur le point d'expirer ;
un nombre de jetons régulé par l'opérateur du réseau de rattachement (104) ; et
des tentatives, par le dispositif d'abonné (102), de rattachement à un autre réseau à l'extérieur du réseau visité (106).

9. Procédé selon la revendication 7, dans lequel les jetons permettent au dispositif d'abonné (102) d'utiliser des services de données pour l'un d'une période de temps fixe et d'un volume fixe de données.

10. Procédé selon la revendication 1, dans lequel le dispositif d'abonné (102) demande un accès à des services de données pendant qu'il est déjà en itinérance dans le réseau visité (106).

11. Procédé selon la revendication 10, dans lequel le dispositif d'abonné (102) demande un accès à des services de données en composant un code abrégé prédéfini ou par l'intermédiaire de données de services supplémentaires non structurées (USSD) pour activer des services de données gratuits ; et, facultativement, dans lequel le code abrégé prédéfini est « *data ».

12. Procédé selon la revendication 1, comprenant en outre : l'envoi, par l'intermédiaire de la passerelle (120), d'un message au dispositif d'abonné (102) pour accéder à des services de données lorsque le dispositif d'abonné (102) essaye de se rattacher à un opérateur d'un réseau qui est différent de l'opérateur du réseau visité (106) et de l'opérateur du réseau de rattachement (104).

13. Système permettant de fournir un accès à la demande à des services de données à un dispositif d'abonné (102), le système comprenant :
une passerelle (120) configurée pour la facilitation d'un accès à la demande du dispositif d'abonné (102) aux services de données, pendant que le dispositif d'abonné (102) est en itinérance dans un réseau visité (106),
dans lequel, lorsque le dispositif d'abonné (102) demande les services d'abonné en itinérance dans le réseau visité (106), lors de la réception de demande par la passerelle (120), la passerelle (120) est en outre configurée pour la fourniture d'un accès aux services de données en réponse à la demande par la modification d'un nom de point d'accès (APN) pour acheminer un accès aux services de données par l'intermédiaire de l'un du réseau visité (106) et d'un réseau de rattachement (104), et
dans lequel la passerelle (120) fournit, au dispositif d'abonné (102), une option d'accès aux services de données par l'intermédiaire soit du réseau visité 106 soit du réseau de rattachement (104).

14. Système selon la revendication 13, dans lequel la passerelle (120) est déployée dans l'un du réseau visité (106) et d'un emplacement de concentrateur auquel un ou plusieurs réseaux visités partenaires (106) accèdent.

15. Produit de programme informatique comprenant un support utilisable par ordinateur sur lequel est mémorisée une logique de commande pour amener un ordinateur à fournir des services de données à la demande à un dispositif d'abonné (102), la logique de commande comprenant :
des moyens pour la facilitation, par l'intermédiaire d'une passerelle (120), d'un accès à la demande du dispositif d'abonné (102) aux services de données, pendant que le dispositif d'abonné (102) est en itinérance dans un réseau visité (106), dans lequel, lorsque le dispositif d'abonné (102) demande les services d'abonné en itinérance dans le réseau visité (106), lors de la réception de demande par la passerelle (120),
la passerelle (120) fournit, au dispositif d'abonné (102) déjà en itinérance, une option d'accès aux services de données par l'intermédiaire soit du réseau visité 106 soit du réseau de rattachement (104) ; et
la passerelle (120) fournit un accès aux services de données en réponse à la demande par la modification d'un nom de point d'accès (APN) pour acheminer un accès aux services de données par l'intermédiaire de l'un du réseau visité (106) et du réseau de rattachement (104).
